# EUROPEAN PATENT APPLICATION

(11) **EP 4 592 788 A1**
(43) Date of publication of application: **30.07.2025**
(21) Application number: 23882412.2
(22) Date of filing: 10.10.2023
(51) Int. Cl.: G05D 1/43

(54) **MOBILE BODY, MOBILE BODY CONTROL METHOD, AND PROGRAM**

(30) Priority: 28.10.2022 JP 2022172900
(71) Applicant: HONDA MOTOR CO., LTD., Tokyo 105-8404 (JP)
(72) Inventor: FUJIMURA, Kotaro, Wako-shi, Saitama 351-0193 (JP)
(74) Representative: Kiwit, Benedikt
(86) International application number: PCT/JP2023/036756
(87) International publication number: WO 2024/090203

(57) **Abstract**

A movable body which is movable in a region where a pedestrian is capable of passing includes: an information output portion that outputs information indicating a turn direction in an information output region that is visually recognizable from a periphery of the movable body; and a notification control portion that controls the information output portion, wherein the notification control portion causes the information output portion to output light of a first color in the information output region when the movable body is traveling straight, and causes the information output portion to output the information indicating the turn direction in the information output region when the movable body is scheduled to start an operation of turning, before a first predetermined time from the start and after causing the information output portion to output light of a second color which does not include the information indicating the turn direction and has a different brightness from the light of the first color in the information output region for a predetermined time or after turning off a light in the information output region for the predetermined time.

## Description

### TECHNICAL FIELD

The present invention relates to a movable body, a movable body control method, and a program.

### BACKGROUND

In the related art, a movable body is disclosed which autonomously moves in an environment where the movable body autonomously moves and in which people present around the movable body can recognize a movement direction of the movable body at a glance (for example, refer to Patent Document 1). The movable body includes: a light emission device that emits light in a radiation direction with respect to a vertical axis of the movable body; an acquisition portion that acquires the movement direction of the movable body; and a light emission control portion that causes the light emission device to emit light in a light emission color which is associated with each direction of the radiation direction in advance using the movement direction acquired by the acquisition portion as a reference, wherein the light emission device is arranged so as to be capable of emitting light in at least one light emission color in a range of arbitrary 180 degrees in the radiation direction.

### [Related Art Documents]

### [Patent Documents]

[Patent Document 1]
Japanese Unexamined Patent Application, First Publication No. 2019-169339

### SUMMARY OF INVENTION

### PROBLEMS TO BE SOLVED BY THE INVENTION

However, in the technique described above, there are cases where a person around the movable body cannot easily recognize the state of the movable body.

In view of the foregoing, an object of the present invention is to provide a movable body, a movable body control method, and a program which provide information so that a person around the movable body can further easily recognize the state of the movable body.

### MEANS FOR SOLVING THE PROBLEM

The following configurations are employed in a movable body, a movable body control method, and a program according to this invention.
(1): A movable body according to an aspect of this invention includes: an information output portion that outputs information indicating a turn direction of the movable body in an information output region that is visually recognizable from a periphery of the movable body which is movable in a region where a pedestrian is capable of passing; and a notification control portion that controls the information output portion, wherein the notification control portion causes the information output portion to output light of a first color in the information output region when the movable body is traveling straight, and causes the information output portion to output the information indicating the turn direction in the information output region when the movable body is scheduled to start an operation of turning, before a first predetermined time from the start and after causing the information output portion to output light of a second color which does not include the information indicating the turn direction and has a different brightness from the light of the first color in the information output region for a predetermined time or after turning off a light in the information output region for the predetermined time.
(2): The aspect (1) described above includes: a recognition portion that recognizes a user and an object at the periphery of the movable body based on an image in which the periphery of the movable body is captured; and a movement control portion that controls the movable body so that the movable body moves together with the user while avoiding the object at the periphery.
(3): **In** the aspect (1) described above, the predetermined time is a time of 0.2 seconds or more.
(4): **In** the aspect (1) described above, the light of the second color has a lower brightness than the light of the first color.
(5): **In** any of the aspects (1) to (4) described above, the information output region includes a first information output region and a second information output region, the first information output region is provided on a front portion of the movable body so as to be visually recognizable by a person at the periphery of the movable body present in a forward direction of the movable body, and the second information output region is provided on a rear portion of the movable body so as to be visually recognizable by a person at the periphery of the movable body present in a rearward direction of the movable body.
(6): **In** the aspect (5) described above, the notification control portion causes the information output portion to output the light of the first color in the information output region when the movable body is operating, and the first color is a color in accordance with a mode of a movement manner set in the movable body.
(7): **In** the aspect (6) described above, when the turning of the movable body is ended, the notification control portion erases the information indicating the turn direction in the information output region and causes the information output portion to output the light of the first color.
(8): A movable body control method according to an aspect of this invention includes, by way of a computer, performing: a process of controlling an information output portion that outputs information indicating a turn direction of a movable body in an information output region that is visually recognizable from a periphery of the movable body when the movable body that is movable in a region where a pedestrian is capable of passing is traveling straight, and causing the information output portion to output light of a first color in the information output region; and a process of causing the information output portion to output the information indicating the turn direction in the information output region when the movable body is scheduled to start an operation of turning, before a first predetermined time from the start and after causing the information output portion to output light of a second color which does not include the information indicating the turn direction and has a different brightness from the light of the first color in the information output region for a predetermined time or after turning off a light in the information output region for the predetermined time.
(9): A program of a movable body according to an aspect of this invention causes a computer to execute: a process of controlling an information output portion that outputs information indicating a turn direction of a movable body in an information output region that is visually recognizable from a periphery of the movable body when the movable body that is movable in a region where a pedestrian is capable of passing is traveling straight, and causing the information output portion to output light of a first color in the information output region; and a process of causing the information output portion to output the information indicating the turn direction in the information output region when the movable body is scheduled to start an operation of turning, before a first predetermined time from the start and after causing the information output portion to output light of a second color which does not include the information indicating the turn direction and has a different brightness from the light of the first color in the information output region for a predetermined time or after turning off a light in the information output region for the predetermined time.

### ADVANTAGE OF THE INVENTION

According to the aspects (1) to (9), the movable body can provide information so that a person around the movable body can further easily recognize the state of the movable body. For example, the movable body can provide information so that a person around the movable body can further easily recognize information indicating turning.

According to the aspect (6), since the movable body outputs a color in accordance with a mode, it is possible to cause a user or a person around the movable body to easily recognize the mode set in the movable body.

### BRIEF DESCRIPTION OF THE DRAWINGS

FIG. 1 is a view showing an example of a configuration of a movable body system 1 including a movable body 100.
FIG. 2 is a view for explaining a use manner of the movable body 100.
FIG. 3 is a perspective view showing the movable body 100.
FIG. 4 is a view showing an example of a functional configuration of the movable body 100.
FIG. 5 is a view showing an example of the contents of control information 232.
FIG. 6 is a view showing an example of a radiation pattern when a distance from the movable body 100 to a user is a first distance.
FIG. 7 is a view showing an example of a radiation pattern when a distance from the movable body 100 to a user is a second distance.
FIG. 8 is a view showing a relationship between a position of the user and a center C of a region where light is emitted in a radiation possible region of an illumination device 160.
FIG. 9 is a view showing a scene in which the movable body 100 is following the user.
FIG. 10 is a flowchart of a flow of a process performed by a control device 200 of the movable body 100.
FIG. 11 is a view showing an example of control information 232 of a modification example.
FIG. 12 is a view for explaining an example of a divided region.
FIG. 13 is a view showing another example of the radiation possible region.
FIG. 14 is a view for explaining information output by an information output portion 116 of a second embodiment.
FIG. 15 is a view showing a relationship between an operation of the movable body 100 and information output to the information output portion 116.
FIG. 16 is a view showing a movable body X of a comparative example.
FIG. 17 is a view showing an example of the information output portion 116 in which a charging rate is output.

### DESCRIPTION OF THE EMBODIMENTS

Hereinafter, embodiments of a movable body, a movable body control method, and a program of the present invention will be described with reference to the drawings.

### <First embodiment>

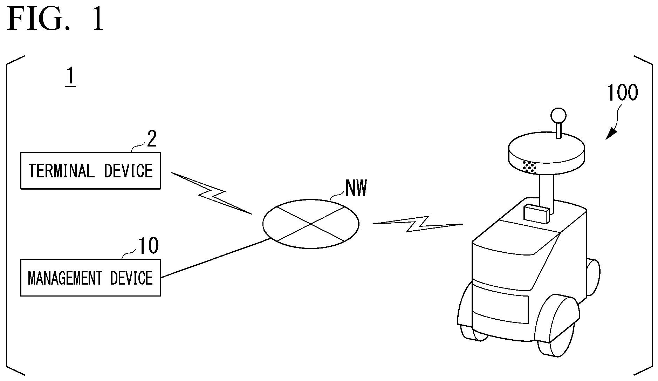

FIG. 1 is a view showing an example of a configuration of a movable body system 1 including a movable body 100. The movable body system 1 includes, for example, one or more terminal devices 2, a management device 10, and one or more movable bodies 100. These components performs communication, for example, via the network NW. The network NW is, for example, an arbitrary network such as a LAN, a WAN, an Internet line, or the like.

### [Terminal Device]

The terminal device 2 is, for example, a computer device such as a smartphone or a tablet terminal. The terminal device 2 requests the provision of the authority of use of the movable body 100 from the management device 10 or acquires information indicating that the use is permitted, for example, based on an operation of the user.

### [Management device]

The management device 10 grants the authority of use of the movable body 100 to the user of the terminal device 2 and manages the reservation of use of the movable body 100 in response to the request of the terminal device 2. The management device 10 generates and manages schedule information in which, for example, identification information of a user registered in advance and the date and time of the use reservation of the movable body 100 are associated with each other.

### [Movable body]

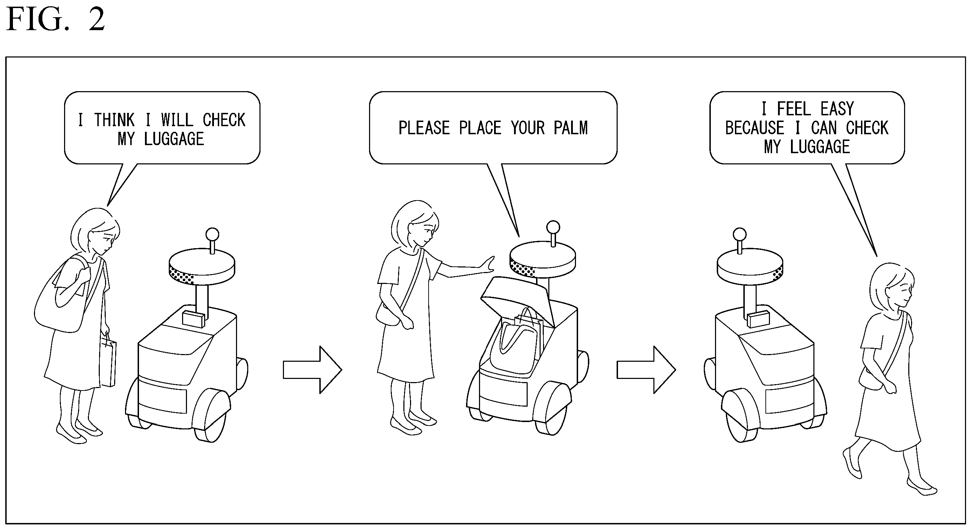

The movable body 100 is used by a user in a use manner as described below. FIG. 2 is a view for explaining a use manner of the movable body 100. The movable body 100 is arranged at a predetermined position, for example, in a facility or a town. When the user wants to use the movable body 100, the user can start the use by operating **a HMI** (described later) of the movable body 100 or can start the use of the movable body 100 by operating the terminal device 2. For example, when the user goes out for shopping and has a large amount of luggage, the user starts the use of the movable body 100 and puts the luggage into a storage portion of the movable body 100. Then, the movable body 100 moves together with the user so as to autonomously follow the user. The user can continue shopping in a state where the luggage is stored in the movable body 100 or can go to the next destination. For example, the movable body 100 moves while moving on a sidewalk or a pedestrian crossing of a roadway together with the user. The movable body 100 is movable in a region where a pedestrian can pass such as a sidewalk and a roadway. For example, the movable body 100 may be used in an indoor or outdoor facility such as a shopping center, an airport, a park, or a theme park or in a private land, and is movable in a region where the pedestrian can pass.

The movable body 100 may be autonomously movable in a mode such as a guidance mode or an emergency mode in addition to (or instead of) a follow mode in which the movable body 100 follows the user as described above. The guidance mode is a mode that guides the user to a destination specified by the user, and is a mode that leads the user by autonomously moving in front of the user in accordance with a movement speed of the user. The emergency mode is a mode that autonomously moves for asking for help from a nearby person or a nearby facility in order to help the user when an abnormality occurs at the user (for example, when the user falls) during moving with the user. Further, the movable body 100 may move while maintaining a distance that is not close to the user and is not far from the user in addition to (or instead of) the follow and the guidance as described above. Further, the present embodiment is described using an example in which each control described later is applied to a movable body that moves together with a user while avoiding a surrounding object; however, the embodiment is not limited to this. Each control may be applied to a movable body that does not move together with a user.

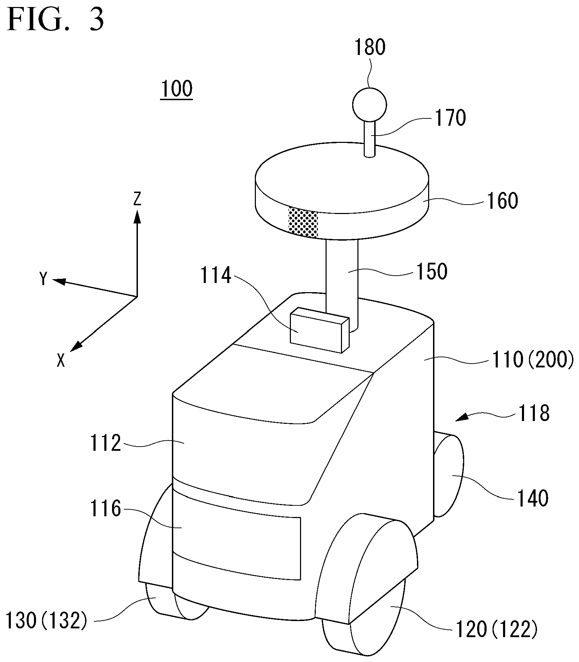

FIG. 3 is a perspective view showing the movable body 100. In the following description, a front direction of the movable body 100 is defined as a plus X direction, a rear direction of the movable body 100 is defined as a minus X direction, a right direction with respect to the plus X direction which is a width direction of the movable body 100 is defined as a plus Y direction, a left side direction is defined as a minus Y direction, and a height direction of the movable body 100 which is a direction orthogonal to the X direction and the Y direction is defined as a plus Z direction.

The movable body 100 includes, for example, a base body 110, a door portion 112 that is provided on the base body 110, and a wheel (a first wheel 120, a second wheel 130, and a third wheel 140) that is assembled to the base body 110. For example, the user can open the door portion 112 and can put the luggage in the storage portion provided on the base body 110 or take the luggage out of the storage portion. The first wheel 120 and the second wheel 130 are a drive wheel, and the third wheel 140 is an auxiliary wheel (driven wheel).

An information output portion 116 is provided on a side surface in the plus X direction of the base body 110 which is the minus Z direction of the door portion of the base body 110. An information output portion 118 is also provided on a side surface in the minus X direction of the base body 110 similarly to the plus X direction. A region where information of the information output portion 116 is output is an example of "a first information output region that is provided on a front portion of the movable body so as to be visually recognized by a person at the periphery of the movable body present in a forward direction of the movable body". A region where information of the information output portion 118 is output is an example of "a second information output region that is provided on a rear portion of the movable body so as to be visually recognized by a person at the periphery of the movable body present in a rearward direction of the movable body".

A support body 150 having a cylindrical shape and extending in the plus Z direction is provided on a surface in the plus Z direction of the base body 110. **An HMI** (Human Machine Interface) 114 which is an operation portion operated by a user is provided in the vicinity of a connection portion between the support body 150 and the base body 110.

The **HMI** 114 is, for example, an operation portion such as a touch panel. The **HMI** 114 may be omitted.

An illumination device 160 having a disk shape is provided on an end portion in the plus Z direction of the support body 150.

A support body 170 having a cylindrical shape and extending in the plus Z direction is provided on a surface in the plus Z direction of the illumination device 160. A camera 180 that captures an image of the circumference of the movable body 100 is provided on an end portion in the plus Z direction of the support body 170. The position where the camera 180 is provided may be an arbitrary position that is different from the position described above.

The illumination device 160 includes one or more light sources and controls the one or more light sources to emit light from a predetermined region in a radiation possible region capable of emitting light. The radiation possible region is a region oriented in the horizontal direction (a direction orthogonal to the Z direction which is the vertical direction). The radiation possible region is provided in a circular shape or a substantially circular shape. In other words, the radiation possible region is a region that is oriented in a radiation direction with respect to the vertical axis (Z direction) of the movable body 100 and is provided in a circular shape or a substantially circular shape in a predetermined angle range in the radiation direction. The predetermined angle range may be a range of 360 degrees or may be an angle range which is less than 360 degrees. The predetermined angle range may be, for example, an angle range of 180 degrees or 270 degrees.

The camera 180 is, for example, a camera capable of capturing an image of the circumference of the movable body 100 at a wide angle (for example, at 360 degrees). The camera 180 may include a plurality of cameras. The camera 180 may be realized, for example, by combining a plurality of 120-degree cameras or a plurality of 60-degree cameras.

The information output portion 116 and the information output portion118 have, for example, a shape of a square in which a side is several centimeters to several tens of centimeters or a substantially square. The shape is not limited to a square and may be other shapes.

The information output portion 116 and the information output portion 118 are a device capable of displaying information such as a segment display using a LED (light-emitting diode), a liquid crystal display, or an organic EL (Electro Luminescence) display. The information output portion 116 and the information output portion 118 notify the user or a person around the movable body 100 who is different from the user, for example, of various information such as the mode set in the movable body 100, information indicating a direction in which the movable body 100 proceeds, or information indicating an electricity storage amount of a battery 134.

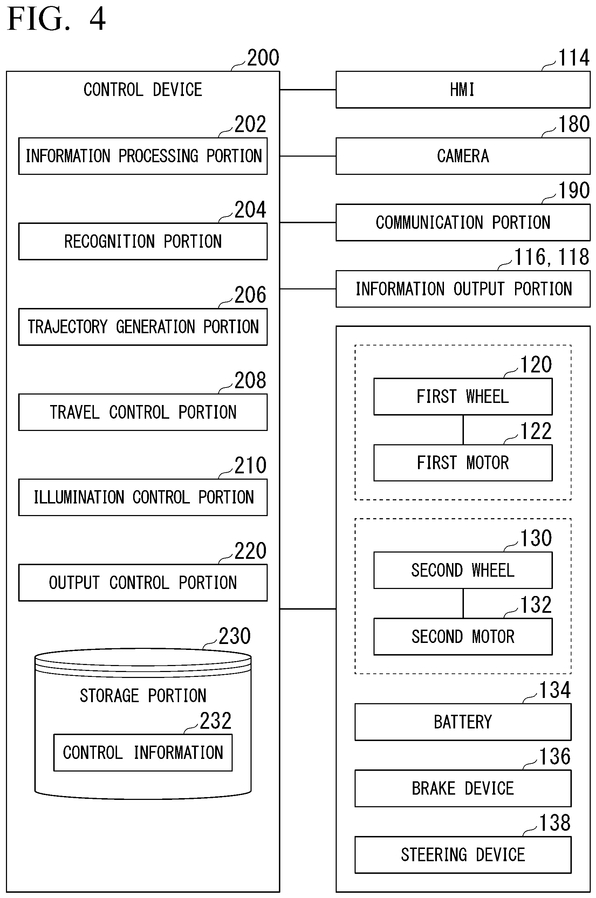

FIG. 4 is a view showing an example of a functional configuration of the movable body 100. The movable body 100 further includes a first motor 122, a second motor 132, a battery 134, a brake device 136, a steering device 138, a communication portion 190, and a control device 200 in addition to the functional configuration shown in FIG. 3. The first motor 122 and the second motor 132 are operated by electric power supplied by the battery 134. The first motor 122 drives the first wheel 120, and the second motor 132 drives the second wheel 130. The first motor 122 may be an in-wheel motor provided on a wheel of the first wheel 120, and the second motor 132 may be an in-wheel motor provided on a wheel of the second wheel 130.

The brake device 136 outputs a brake torque to each wheel based on a command of the control device 200. The steering device 138 includes an electric motor. The electric motor changes the direction of the first wheel 120 or the second wheel 130 by applying a force to a rack-and-pinion mechanism, for example, based on a command of the control device 200 and changes the course of the movable body 100.

The communication portion 190 is a communication interface for communicating with the terminal device 2 or the management device 10.

### [Control device]

The control device 200 includes, for example, an information processing portion 202, a recognition portion 204, a trajectory generation portion 206, a travel control portion 208, an illumination control portion 210, an output control portion (notification control portion) 220, and a storage portion 230. The information processing portion 202, the recognition portion 204, the trajectory generation portion 206, the travel control portion 208, the illumination control portion 210, and the output control portion 220 are realized, for example, by a hardware processor such as a CPU (Central Processing Unit) executing a program (software). Some or all of these components may be realized by hardware (a circuit portion including circuitry) such as an LSI (Large Scale Integration), an ASIC (Application Specific Integrated Circuit), an FPGA (Field-Programmable Gate Array), or a GPU (Graphics Processing Unit), or may be realized by cooperation of software and hardware. The program may be stored in advance in a storage device (a storage device including a non-transitory storage medium) such as a HDD (Hard Disk Drive) or a flash memory, or may be stored in a removable storage medium (non-transitory storage medium) such as a DVD or a CD-ROM and be installed by attaching the storage medium to a drive device. The storage portion 230 is realized by a storage device such as a HDD, a flash memory, or a RAM (Random Access Memory). Control information 232 described later is stored in the storage portion 230. Both or one of the trajectory generation portion 206 and the travel control portion 208 are an example of a "movement control portion".

The information processing portion 202 manages, for example, information acquired from the terminal device 2 or the management device 10.

The recognition portion 204 recognizes a position (a distance from the movable body 100 and a direction to the movable body 100) of an object that is present around the movable body 100 and the state of a speed, acceleration, and the like, for example, based on an image captured by the camera 180. The object includes a traffic participant, an obstacle that is present in the facility or on the road, and the like. The recognition portion 204 recognizes and tracks the user of the movable body 100. The recognition portion 204 tracks the user, for example, based on an image (for example, a face image of the user) in which the user who is registered when the user uses the movable body 100 is captured or a face image (or a feature amount obtained from the user face image) of the user provided by the terminal device 2 or the management device 10. The recognition portion 204 recognizes a gesture made by the user. A detection portion such as a radar device or a LIDAR which is different from the camera may be provided on the movable body 100. In this case, the recognition portion 204 recognizes the situation around the movable body M by using a detection result of the radar device or the LIDAR instead of (or in addition to) the image.

The trajectory generation portion 206 generates a trajectory on which the movable body 100 should travel in the future, for example, based on a gesture of the user, a destination set by the user, a surrounding object, a position of the user, and the like. The trajectory generation portion 206 generates a trajectory on which the movable body 100 can move smoothly to a target point. The trajectory generation portion 206 generates a trajectory corresponding to the action of the movable body 100, for example, based on a correspondence relationship between a gesture and an action set in advance or generates a trajectory for heading to a destination while avoiding a surrounding object. Further, the trajectory generation portion 206 generates, for example, a trajectory for following the user who is tracked. The trajectory generation portion 206 generates, for example, a trajectory corresponding to an action based on a mode set in advance. The trajectory generation portion 206 generates a plurality of trajectories corresponding to the action of the movable body 100 and obtains a risk for each trajectory, and when the total value of obtained risks or the risk of each trajectory point satisfies a reference set in advance (for example, when the total value is equal to or less than a threshold value Th1 and the risk of each trajectory point is equal to or less than a threshold value Th2), a trajectory that satisfies the reference is adopted as a trajectory on which the movable body 100 moves. The risk tends to be, for example, higher as the distance to the obstacle is smaller with respect to the trajectory (trajectory point of the trajectory) and be smaller as the distance to the obstacle is increased with respect to the trajectory.

The travel control portion 208 controls the motor (the first motor 122, the second motor 132), the brake device 136, and the steering device 138 so that the movable body 100 travels along the trajectory that satisfies the reference set in advance.

The illumination control portion 210 controls the illumination device 160 to control a radiation pattern in which the illumination device 160 radiates light. The illumination control portion 210 controls the radiation pattern, for example, based on the distance between the movable body 100 and the user which is changed in accordance with the movement of one or both of the movable body 100 and the user, and the direction of the user with respect to the movable body 100. The radiation pattern is, for example, a region where light is radiated in the radiation possible region of the illumination device 160, the intensity of the light in each region, the color of the light, and the like.

The illumination control portion 210 controls the illumination device 160, for example, with reference to the control information 232. The control information 232 is information in which the distance from the movable body 100 to the user who is tracked and the radiation pattern are associated with each other.

The output control portion 220 controls the information output portion 116 and the information output portion 118 to display desired information on the information output portion 116 and the information output portion 118. Details of a process of the output control portion 220 will be described in a second embodiment.

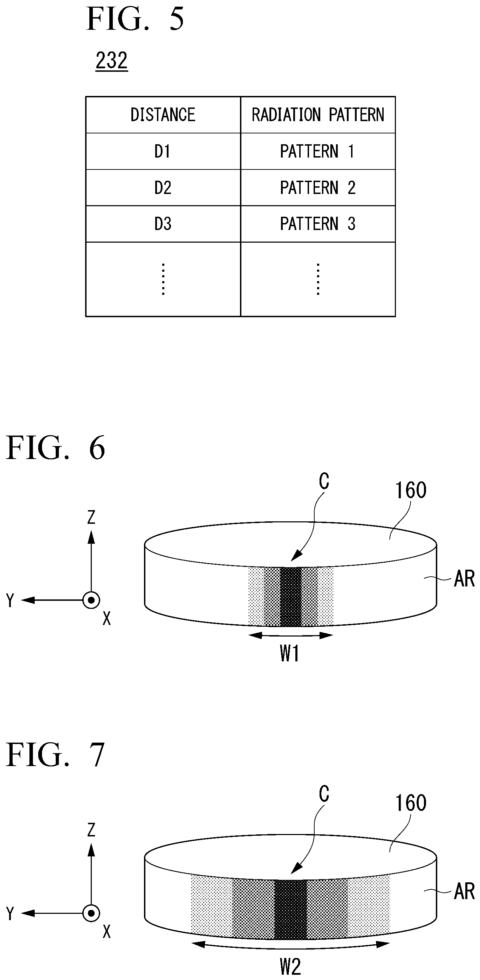

FIG. 6 is a view showing an example of a radiation pattern when the distance from the movable body 100 to the user is a first distance. In FIG. 6 and FIG. 7 described later, a radiation possible region AR of the illumination device 160 is provided in a circle form in 360 degrees toward the horizontal direction. For example, in the case of the first distance, the illumination control portion 210 controls the illumination device 160 so that light is emitted in a region of a first width W1 in the radiation possible region AR. The illumination control portion 210 controls the illumination device 160 so that the center C in the width direction of the first width W1 or the vicinity of the center C is the brightest, and the brightness is decreased at a position farther away from the center in a circumferential direction (width direction).

The center C is, for example, a direction in which the user who is tracked is present. The center C is, for example, a direction that directly faces the user who is tracked. The center C is, for example, the closest position from the user in the radiation possible region AR. The illumination control portion 210 sets the center C based on the direction in which the tracked user is present and further sets the width (angle range) of the region in which the light is emitted in the radiation possible region AR based on the distance between the tracked user and the movable body 100.

FIG. 7 is a view showing an example of a radiation pattern when the distance from the movable body 100 to the user is a second distance. The second distance is a distance that is shorter than the first distance. For example, in the case of the second distance, the illumination control portion 210 controls the illumination device 160 so that light is emitted in a region of a second width W2 in the radiation possible region AR. The second width W2 is a width that is wider than the first width W1.

The center C in this case is determined by the direction in which the user is present as described above.

The above embodiment is described using an example in which the width of the region where light is emitted becomes wider as the distance between the movable body 100 and the user is closer, and the width of the region where light is emitted becomes narrower as the distance between the movable body 100 and the user is farther. However, conversely, the width of the region where light is emitted may become narrower as the distance between the movable body 100 and the user is closer, and the width of the region where light is emitted may become wider as the distance between the movable body 100 and the user is farther. Further, the illumination control portion 210 may change the radiation pattern in a manner that is different from the manner described above depending on the distance between the movable body 100 and the user.

Further, the intensity of the emitted light may be changed in accordance with the width of the region where the light is emitted in the radiation possible region AR. For example, in the case where the width is narrow, stronger light may be emitted than the case where the width is wide. For example, the intensity of the light at the center C or in the vicinity of the center C in the case where the width is narrow may be stronger than the intensity of the light at the center C or in the vicinity of the center C in the case where the width is wide. Thereby, a user far away can further easily recognize that light is emitted.

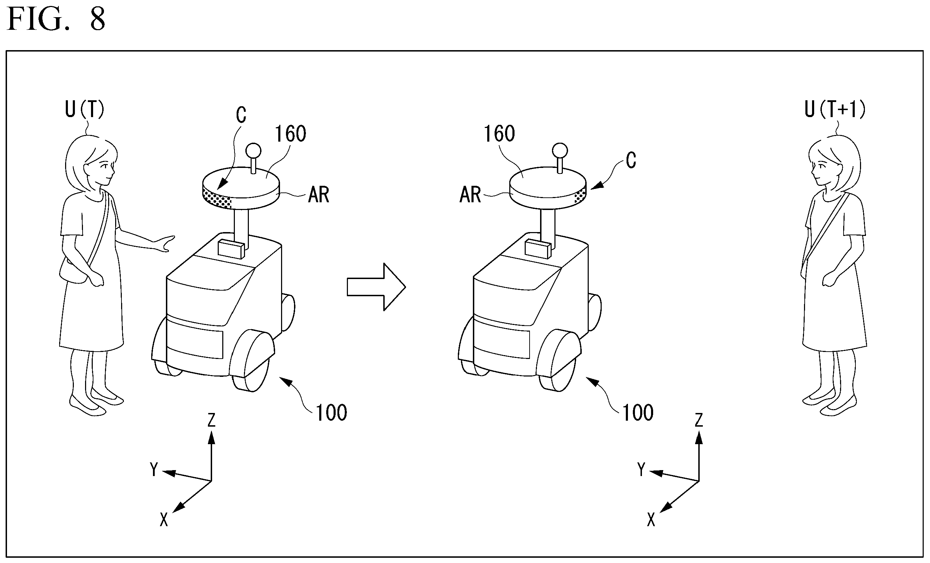

FIG. 8 is a view showing a relationship between the position of the user and the center C of the region where light is emitted in the radiation possible region of the illumination device 160. At a time T, when the user is located in the plus X direction and the plus Y direction of the movable body 100, the center C becomes a position that directly faces the user. When the user visually recognizes the illumination device 160 from this position, a region where the strongest light is emitted is located at the front or in the vicinity of the front.

At a time T+1, when the user moves in the plus X direction and the minus Y direction of the movable body 100, the center C moves in the minus Y direction in accordance with the movement of the user, and the center C becomes a position that directly faces the user who has moved. When the user visually recognizes the illumination device 160 from this position, a region where the strongest light is emitted is located at the front or in the vicinity of the front.

The above embodiment is described using an example in which the position of the center C is changed when the user moves; however, when the user does not move and the movable body 100 moves, or when the user and the movable body 100 move, the center C is changed similarly.

As described above, the illumination control portion 210 controls the radiation pattern based on the distance and the direction that are changed in accordance with the movement of one or both of the movable body 100 and the user, and thereby, the user can easily recognize whether or not the movable body 100 is performing an action in accordance with the intention of the user when the user is moving.

### [Scene where movable body follows user]

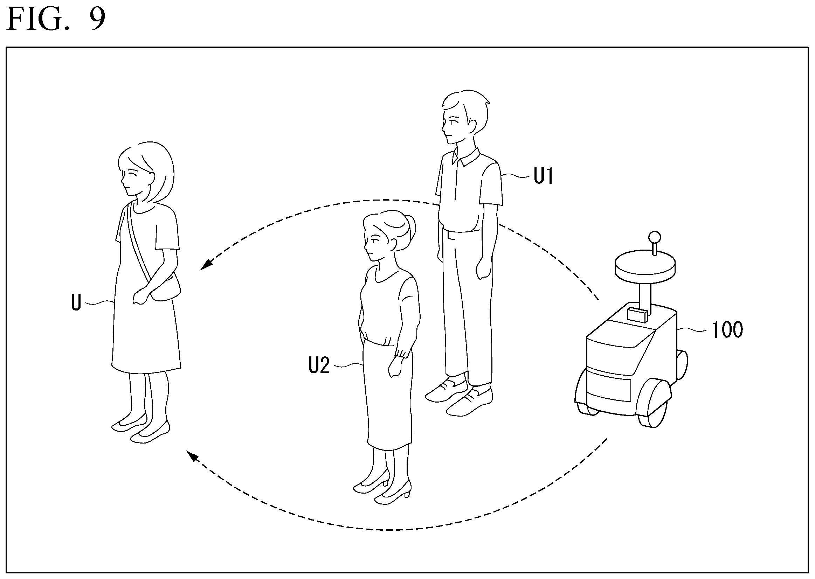

FIG. 9 is a view showing a scene in which the movable body 100 is following the user. In a region where there are many traffic participants, when the movable body 100 is following the user U, a traffic participant may be located between the movable body 100 and the user, and the movable body 100 may not be able to follow the user. As shown in FIG. 9, when the course of the movable body 100 is blocked by a traffic participant U1 and a traffic participant U2, the movable body 100 may move on a trajectory that follows the user by bypassing and avoiding the traffic participant U1 and the traffic participant U2. In such a scene, the movable body 100 may stop, or the movable body 100 may proceed in a direction that is not intended by the user. When the movable body 100 behaves as described above, the user may feel that the movable body 100 loses sight of the user, and the tracking is stopped.

Further, when an obstacle such as a traffic participant around the movable body 100 is present, and the movable body 100 turns, the movable body 100 may come into contact with the obstacle by the turn. Also in such a case, the movable body 100 waits until the obstacle is no longer present, or the movable body 100 moves away from the obstacle, and thereby, the movable body 100 may perform an operation so as to move away from the user. Also in such a case, the user may feel that the movable body 100 loses sight of the user, and the tracking is stopped.

Therefore, in the present embodiment, when the movable body 100 does not lose sight of the user, the illumination control portion 210 changes the radiation pattern of the illumination device 160 based on the distance between the movable body 100 and the user and the direction of the user with respect to the movable body 100 as described above, and thereby, the user can understand that the movable body 100 recognizes the user.

### [Flowchart]

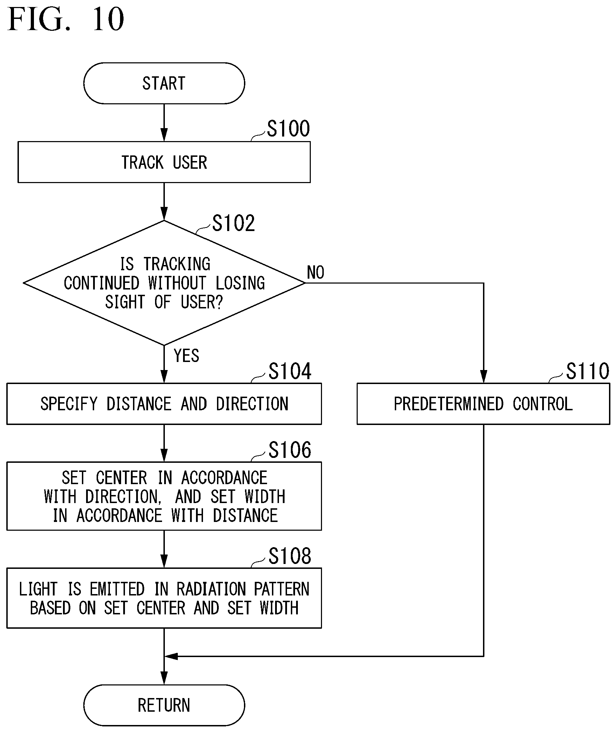

FIG. 10 is a flowchart of a flow of a process performed by the control device 200 of the movable body 100. First, the recognition portion 204 of the control device 200 tracks the user (Step S100). Next, the illumination control portion 210 of the control device 200 determines whether the recognition portion 204 continues tracking without losing sight of the user (Step S102).

When the tracking is continued, the illumination control portion 210 specifies the distance from the movable body 100 to the user and the direction of the user with respect to the movable body 100 (Step S104). Next, the illumination control portion 210 sets the center of a radiation region (a region where light is emitted in the radiation possible region) in accordance with the specified direction and sets the width of the radiation region in accordance with the distance (Step S106). Next, the illumination control portion 210 controls the illumination device 160 so that light is emitted in a radiation pattern based on the set center and the set width (Step S108).

When the tracking is not continued, the illumination control portion 210 performs a predetermined control (Step S110). For example, the illumination control portion 210 causes light to be emitted from all of the regions in the radiation possible region or causes a predetermined region in the radiation possible region to emit light in a color different from the color of the light to be emitted when the tracking is continued. When the tracking is not continued, the illumination control portion 210 controls the illumination device 160 to notify the user that the tracking is not continued. In the present process, the radiation pattern may be determined by using one of the distance and the direction.

### [First modification example]

The above embodiment is described using an example in which the radiation pattern is controlled based on the direction of the user and the distance between the movable body 100 and the user; however, in place of (or in addition to) this, the radiation pattern may be controlled depending on a region where the user is present in the regions divided around the movable body 100.

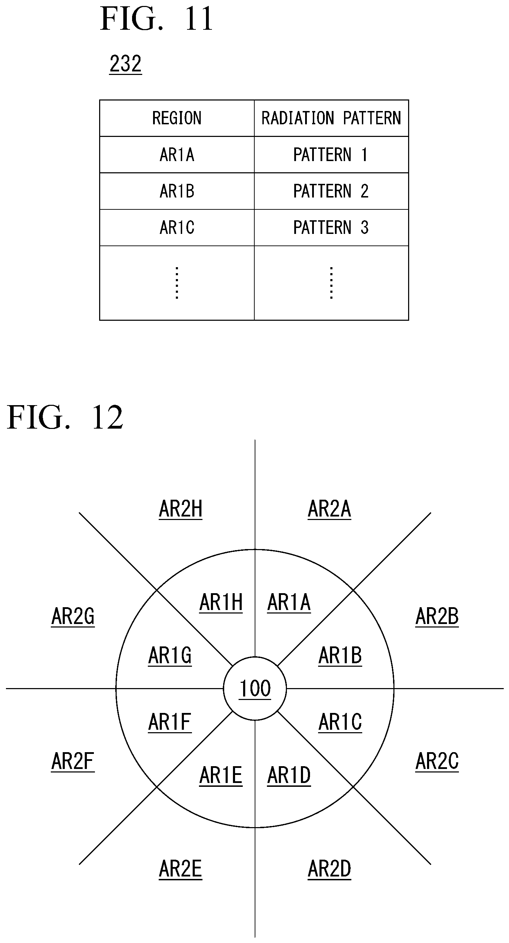

FIG. 11 is a view showing an example of control information 232 of a modification example. The control information 232 is, for example, information in which a region and a radiation pattern are associated with each other.

FIG. 12 is a view for explaining an example of a divided region. In the example of FIG. 12, a region in a radial fashion centered on the movable body 100 is divided into a region within a predetermined distance from the movable body 100 and a region beyond the predetermined distance from the movable body 100, and each region is further divided into eight equal parts. For example, the region is divided by shifting a division line by 45 degrees from a reference direction set with respect to the movable body 100. For example, the region within the predetermined distance from the movable body 100 is divided into regions AR1A to AR1H, and, for example, the region beyond the predetermined distance from the movable body 100 is divided into regions AR2A to AR2H. When the user is present in the region AR1A, the width is the second width W2, and the center C is a position that directly faces the center of an arc which divides the region AR1A. When the user is present in the region AR2A, the width is the first width W1, and the center C is a position that directly faces the center of the arc which divides the region AR1A.

The control device 200 can easily cause the illumination device 160 to emit light in a radiation pattern that is suitable for the user based on the region in which the user is present.

### [Second modification example]

In the second modification example, the color of light is changed in accordance with the distance between the movable body 100 and the user. The illumination control portion 210 changes the color of the light to be emitted in the radiation possible region in accordance with the distance from the movable body 100 to the user. When the distance from the movable body 100 to the user is a third distance, the illumination control portion 210 may emit light (for example, red, orange, or yellow light, or the like) of a warm color or a color close to a warm color in the radiation possible region as compared with the case where the distance from the movable body 100 to the user is a fourth distance that is longer than the third distance. This process may be performed together with the change of the width of the region where the light is emitted as described above.

Since the control device 200 changes the color of the light in accordance with the distance between the movable body 100 and the user as described above, it is possible to further easily recognize whether or not the movable body 100 is performing an action in accordance with the intention of the user when the user is moving.

### [Third modification example]

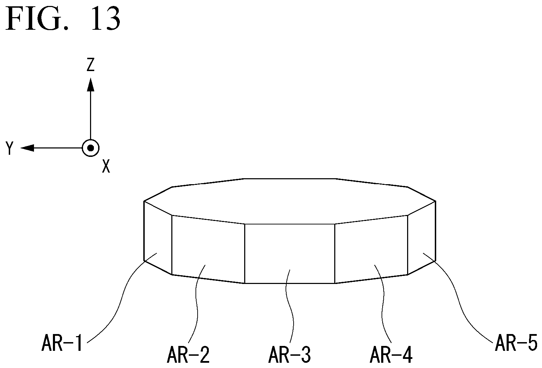

The above embodiment is described using an example in which the radiation possible region of the illumination device 160 is one region without division; however, the radiation possible region may be constituted of a plurality of regions AR1 to AR-n as shown in FIG. 13. Further, the radiation possible region does not have a circular shape and may have a polygonal shape as shown in FIG. 13. In this case, for example, the illumination control portion 210 may emit light from one radiation possible region that corresponds to the direction of the user with respect to the movable body 100 among the plurality of radiation possible regions, or may select two or more radiation possible regions that correspond to the direction of the user with respect to the movable body 100 from the plurality of radiation possible regions and emit light from the selected radiation possible regions. **In** the example of FIG. 13, the plurality of radiation possible regions are connected without a gap; however, instead of this, a gap may be present between the radiation possible regions.

### [Other modification examples]

The above embodiment is described using an example in which the light is adjusted so that the brightness is reduced from the center C toward the circumferential direction (so that the brightness is reduced in a step-by-step manner, by gradation). Alternatively, the brightness may be adjusted by other modes. For example, a large number of small lights may be arranged in a mesh form in the radiation possible region. **In** this case, the control may be performed so that a large number of lights are turned on at the center C or in the vicinity of the center C, and the number of lights that are turned on is reduced in the circumferential direction.

The color of the light emitted in the radiation possible region may be set for each user. For example, the user may set a color so as to emit a favorite color by operating an operation portion of the terminal device 2 or the movable body 100. Thereby, the color of the light emitted in the radiation possible region is the color set by the user. For example, when a plurality of movable bodies 100 are present, the user can easily recognize the movable body 100 that the user uses.

Further, the color of the light emitted in the radiation possible region may be set for each mode of the movable body 100. The mode is, for example, the follow mode, the guidance mode, and the emergency mode described above, or the like. Further, the mode may include a home delivery mode. The home delivery mode is a mode in which the luggage is delivered to a designated place. For example, the color of the light is determined for each mode, and light of a color in accordance with the mode is emitted in the radiation possible region. Further, the color of the light emitted in the radiation possible region may be set for each combination of the user and the mode. In this case, light of a color in accordance with the combination of the user and the mode is emitted in the radiation possible region. Thereby, a third person can also easily understand the mode in which the movable body 100 is moving.

According to the first embodiment described above, the control device 200 recognizes the distance from the movable body 100 to the user and the direction in which the user is present with respect to the movable body 100 and controls the radiation pattern of light based on the direction of the user with respect to the movable body 100 and the distance between the movable body 100 and the user which is changed in accordance with the movement of one or both of the movable body 100 and the user, and thereby, it is possible to easily recognize whether the movable body is performing an action in accordance with the intention of the user while the user is moving.

### <Second embodiment>

Hereinafter, a second embodiment is described. In the first embodiment, the control manner of the illumination device 160 is described. In the second embodiment, a control manner of the information output portions 116 and 118 is described. The control of the first embodiment and the control of the second embodiment may be performed in a superimposed manner, or one control may be performed. Hereinafter, the contents of the second embodiment are described.

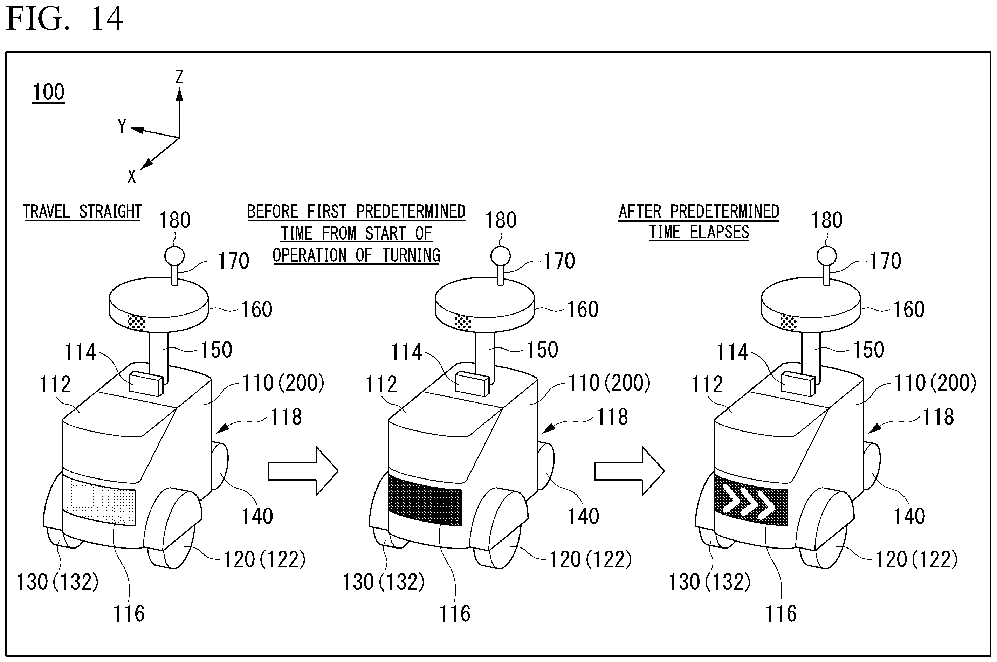

FIG. 14 is a view for explaining information output by the information output portion 116 of the second embodiment. When the movable body 100 is traveling straight, the output control portion 220 causes the information output portion 116 to output the light of a first color in the radiation possible region (information output region) of the information output portion 116. When the movable body 100 is scheduled to start an operation of turning, the output control portion 220 causes the information output portion 116 to output, for a predetermined time, light of a second color which does not include information indicating the turn direction and has a lower brightness than the light of the first color in the radiation possible region before a first predetermined time from the start of the operation of turning. Then, the output control portion 220 causes the information output portion 116 to output the information indicating the turn direction in the radiation possible region and causes the information output portion 116 to output the information indicating the turn direction even when the movable body 100 is turning. Further, alternatively, when the movable body 100 is scheduled to start the operation of turning, the output control portion 220 may turn off the light in the radiation possible region for a predetermined time before the first predetermined time from the start of the operation of turning, then cause the information output portion 116 to output the information indicating the turn direction in the radiation possible region, and cause the information output portion 116 to output the information indicating the turn direction even when the movable body 100 is turning.

The predetermined time when the light of the second color is output is, for example, 0.2 seconds or a time period of 0.2 seconds or more. The second color is, for example, black or gray, and the first color is a color having a higher brightness than black or gray. The information indicating the turn direction is, for example, an arrow indicating the turn direction or an output of a manner in which an arrow indicating the turn direction flows in the turn direction as shown in FIG. 14. The information indicating the turn direction may be a character, a symbol, or the like in addition to those described above. The above embodiment is described using an example in which the light of the second color has a lower brightness than the light of the first color; however, in place of this, the brightness of the light of the second color may be different from the brightness of the light of the first color. For example, the light of the second color may have a higher brightness than the light of the first color.

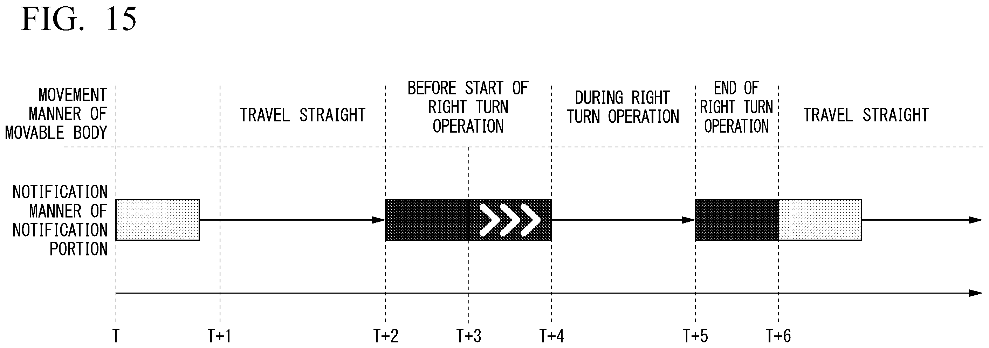

FIG. 15 is a view showing a relationship between an operation of the movable body 100 and information output to the information output portion 116. At the time T, when the movable body 100 is set to a predetermined mode and starts the operation, the information output portion 116 outputs light of a color in accordance with the set mode. At the time T+1, the movable body 100 starts moving and travels straight. In this case, the light of the color in accordance with the set mode is output.

At a time T+2, the light of the second color is output. The time T+2 is a time before a first predetermined time from a time T+4 which is a timing when the movable body 100 starts a right turn operation. The light of the second color is output for a predetermined time. A time T+3 is a timing before the movable body 100 starts the right turn operation and when a predetermined time has elapsed from the time T+2. At this time, the light of the second color including the information indicating that the right turn is performed is output. The output of this information continues until a time T+5.

The time T+5 is a timing when the right turn operation is ended. The end of the right turn operation means, for example, that the directions of the first wheel 120 and the second wheel 130 are coincident with or matched with the X direction. At the time T+5, the information indicating that the right turn is performed is erased, and the light of the second color is output. This output manner continues for a predetermined time. Then, at a time T+6 when a predetermined time has elapsed, the light of the color in accordance with the set mode is output.

As described above, by causing the information output portion 116 to output a color of the color in accordance with the set mode, and in the case where turning is performed, by causing the information output portion 116 to temporarily output the light of the second color before the turning and then causing the information output portion 116 to output the information indicating the turn direction, the movable body 100 can allow a surrounding person to be able to further easily recognize the state of the movable body.

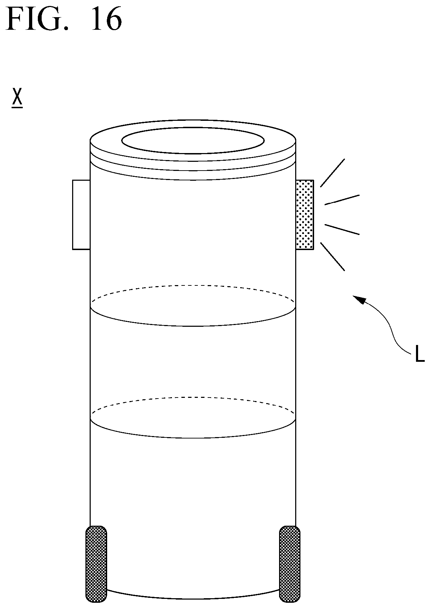

Here, when turning is performed, a movable body X of a comparative example shown in FIG. 16 announces the turn direction by turning on a direction indicator L. However, the movable body X is different from a vehicle or the like and has a different type, shape, operation, and the like, and even when the direction indicator L is turned on, a surrounding person may not assume that the movable body X turns but may assume that the movable body X performs another operation or receives a predetermined command. **In** this case, when the movable body X performs a turn operation, due to an action which a surrounding person does not intend, the movable body X may come into contact with the surrounding person or may interfere with the operation of the surrounding person, and therefore, countermeasures are required.

Therefore, the movable body 100 of the present embodiment controls the output manner of the information output by the information output portion 116 in accordance with the operation of the movable body 100 as described above. As described above, by changing the color to the second color once before turning, attention is attracted from the surrounding person, and then the information indicating the turn direction is output. Thereby, the surrounding person can easily assume the action of the movable body 100.

The above embodiment is described using an example in which the information output portion 116 outputs information indicating the direction of turning; however, in addition to (or instead of) this, information indicating various states of the movable body 100 may be output. For example, a charging rate of the battery 134, a time period during which the movable body 100 can operate, a distance for which the movable body 100 can move, and the like may be output.

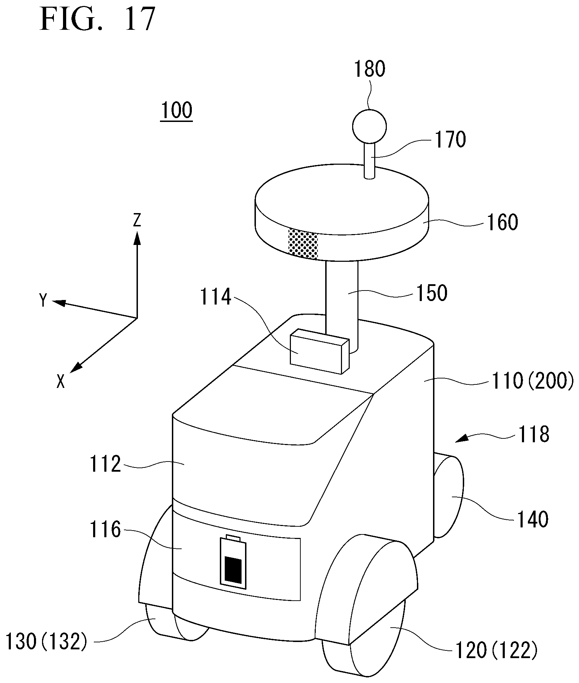

FIG. 17 is a view showing an example of the information output portion 116 in which a charging rate is output. For example, when the administrator of the movable body 100 operates the movable body 100 or commands to the management device 10 by operating a terminal device owned by the administrator, the information output portion 116 outputs the charging rate of the battery 134. Thereby, the administrator can easily recognize the necessity of charging and the necessity of replacement of the battery 134.

According to the second embodiment described above, when the movable body 100 is traveling straight, the output control portion 220 causes the information output portion 116 (or 118) to output the light of the first color in the radiation possible region (information output region), and when the movable body 100 is scheduled to start the operation of turning from the state of traveling straight, the output control portion 220 causes the information output portion 116 to output, for a predetermined time, the light of the second color that does not include information indicating the turn direction and has a lower brightness than the light of the first color in the radiation possible region before a first predetermined time from the start, and then causes the information output portion 116 to output the information indicating the turn direction in the radiation possible region. Thereby, it is possible to provide information so that a surrounding person can further easily recognize the state of the movable body.

The embodiments described above can be expressed as follows.

A movable body including:
a storage medium that stores computer-readable instructions; and
a processor coupled to the storage medium,
wherein the processor executes the computer-readable instructions to:
   recognize an object at a periphery of a movable body and a user based on an image;
   control the movable body to move together with the user while avoiding the object around the movable body;
   control an illumination device that emits light from a predetermined region in a radiation possible region capable of emitting light to control a radiation pattern in which the illumination device emits light;
   recognize a direction in which the user is present with respect to the movable body; and
   control the radiation pattern based on the direction that is changed in accordance with a movement of one or both of the movable body and the user.

The embodiments described above can be expressed as follows.

A movable body including:
a storage medium that stores computer-readable instructions; and
a processor coupled to the storage medium,
wherein the processor executes the computer-readable instructions to perform:
   a process of controlling an information output portion having an information output region that outputs information indicating a turn direction of a movable body, the information output region being visually recognizable by an object at a periphery of the movable body, when the movable body that is movable in a region where a pedestrian is capable of passing is traveling straight, and causing the information output portion to output light of a first color in the information output region; and
   a process of causing the information output portion to output information indicating the turn direction in the information output region when the movable body is scheduled to start an operation of turning, before a first predetermined time from the start and after causing the information output portion to output light of a second color which does not include information indicating the turn direction and has a different brightness from the light of the first color in the information output region for a predetermined time or after turning off a light in the information output region for the predetermined time.

Although modes for implementing the present invention have been described using the embodiments, the present invention is not limited to such embodiments at all, and various modifications and replacements can be made without departing from the scope of the present invention.

### DESCRIPTION OF THE REFERENCE SYMBOLS

- 1: Movable body system
- 2: Terminal device
- 10: Management device
- 100: Movable body
- 110: Base body
- 112: Door portion
- 116, 118: Information output portion
- 120: First wheel
- 122: First motor
- 130: Second wheel
- 132: Second motor
- 134: Battery
- 140: Third wheel
- 160: Illumination device
- 180: Camera
- 200: Control device
- 202: Information processing portion
- 204: Recognition portion
- 206: Trajectory generation portion
- 208: Travel control portion
- 210: Illumination control portion
- 220: Output control portion
- 230: Storage portion
- 232: Control information

## Claims

1. A movable body comprising:
an information output portion that outputs information indicating a turn direction of the movable body in an information output region that is visually recognizable from a periphery of the movable body which is movable in a region where a pedestrian is capable of passing; and
a notification control portion that controls the information output portion,
wherein the notification control portion
causes the information output portion to output light of a first color in the information output region when the movable body is traveling straight, and
causes the information output portion to output the information indicating the turn direction in the information output region when the movable body is scheduled to start an operation of turning, before a first predetermined time from the start and after causing the information output portion to output light of a second color which does not include the information indicating the turn direction and has a different brightness from the light of the first color in the information output region for a predetermined time or after turning off a light in the information output region for the predetermined time.

2. The movable body according to claim 1, comprising:
a recognition portion that recognizes a user and an object at the periphery of the movable body based on an image in which the periphery of the movable body is captured; and
a movement control portion that controls the movable body so that the movable body moves together with the user while avoiding the object at the periphery.

3. The movable body according to claim 1,
wherein the predetermined time is a time of 0.2 seconds or more.

4. The movable body according to claim 1,
wherein the light of the second color has a lower brightness than the light of the first color.

5. The movable body according to any one of claims 1 to 4,
wherein the information output region includes a first information output region and a second information output region,
the first information output region is provided on a front portion of the movable body so as to be visually recognizable by a person at the periphery of the movable body present in a forward direction of the movable body, and
the second information output region is provided on a rear portion of the movable body so as to be visually recognizable by a person at the periphery of the movable body present in a rearward direction of the movable body.

6. The movable body according to claim 5,
wherein the notification control portion causes the information output portion to output the light of the first color in the information output region when the movable body is operating, and
the first color is a color in accordance with a mode of a movement manner set in the movable body.

7. The movable body according to claim 6,
wherein when the turning of the movable body is ended, the notification control portion erases the information indicating the turn direction in the information output region and causes the information output portion to output the light of the first color.

8. A movable body control method, by way of a computer, performing:
a process of controlling an information output portion that outputs information indicating a turn direction of a movable body in an information output region that is visually recognizable from a periphery of the movable body when the movable body that is movable in a region where a pedestrian is capable of passing is traveling straight, and causing the information output portion to output light of a first color in the information output region; and
a process of causing the information output portion to output the information indicating the turn direction in the information output region when the movable body is scheduled to start an operation of turning, before a first predetermined time from the start and after causing the information output portion to output light of a second color which does not include the information indicating the turn direction and has a different brightness from the light of the first color in the information output region for a predetermined time or after turning off a light in the information output region for the predetermined time.

9. A program that causes a computer to execute:
a process of controlling an information output portion that outputs information indicating a turn direction of a movable body in an information output region that is visually recognizable from a periphery of the movable body when the movable body that is movable in a region where a pedestrian is capable of passing is traveling straight, and causing the information output portion to output light of a first color in the information output region; and
a process of causing the information output portion to output the information indicating the turn direction in the information output region when the movable body is scheduled to start an operation of turning, before a first predetermined time from the start and after causing the information output portion to output light of a second color which does not include the information indicating the turn direction and has a different brightness from the light of the first color in the information output region for a predetermined time or after turning off a light in the information output region for the predetermined time.
